# EUROPÄISCHE PATENTSCHRIFT

(11) **EP 0 968 404 B1**
(45) Veröffentlichungstag und Bekanntmachung des Hinweises auf die Patenterteilung: **01.10.2003**
(21) Anmeldenummer: 98914791.3
(22) Anmeldetag: 20.02.1998
(51) Int. Cl.: G01D 5/48

(54) **LAGE- ODER WEGSENSOR**
POSITION OR PATH SENSOR
DETECTEUR DE POSITION OU DE DEPLACEMENT

(30) Priorität: 25.03.1997 DE 19712374
(43) Veröffentlichungstag der Anmeldung: 05.01.2000
(73) Patentinhaber: ROBERT BOSCH GMBH, 70442 Stuttgart (DE)
(72) Erfinder: PFIZENMAIER, Heinz, D-71229 Leonberg (DE); VIOGTLAENDER, Klaus, D-73117 Wangen (DE)
(86) Internationale Anmeldenummer: DE9800505
(87) Internationale Veröffentlichungsnummer: WO98043048

(56) Entgegenhaltungen:
- EP-A- 0 644 329
- DAVID M. POZAR: "Microwave Engineering" Februar 1991 , ADDISON-WESLEY PUBLISHING COMPANY XP002072668 siehe Seite 348, Absatz 6 - Seite 350, Absatz 2; Abbildung 7.9
- DATABASE WPI Section PQ, Week 8621 Derwent Publications Ltd., London, GB; Class Q53, AN 86-136066 XP002072670 & SU 1 186 822 A (KONSTANTINOV V A)
- WENGER J: "A microwave resonant cavity sensor for accurate non-contacting gap measurements" MICROWAVES AND RF CONFERENCE PROCEEDINGS, MR 95. MICROWAVES AND RF, LONDON, UK, 10-12 OCT. 1995, 1995, SWANLEY, UK, NEXUS MEDIA, UK, Seiten 113-116, XP002072667
- H.M.BARLOW ET AL: "Micro-wave Measurements" 1966 , CONSTABLE AND COMPANY LTD , LONDON, UK XP002072669 siehe Seite 1, Absatz 1 - Seite 4, Absatz 1; Abbildung 1

## Beschreibung

### Stand der Technik

Die Erfindung betrifft einen Lage- oder Wegsensor, insbesondere für die Erfassung der Hubbewegung eines mechanischen Teils wie z.B. einer Ventilnadel, nach dem Oberbegriff des Hauptanspruchs.

Sensoren der eingangs angegebenen Art werden insbesondere bei der Messung relativ kleiner Wege von auslenkbaren Körpern, beispielsweise bei der Erfassung des Ventilnadelhubs in Einspritzventilen für Kraftfahrzeuge, eingesetzt. Um hier auf engstem Raum die kleinen Auslenkbewegungen zu erfassen werden bei bekannten Anordnungen optische oder magnetische Sensoren aufgebaut, die in der Regel konstruktiv sehr aufwendig sind und hohe Kosten verursachen.

Es ist beispielsweise aus der EP 0 427 882 B1 ein Sensor der eingangs genannten Art bekannt, bei dem sich ein Permanentmagnet als auslenkbarer Körper im Bereich eines magnetfeldempfindlichen Sensors bewegt.

Insbesondere bei der Messung von Nadelhüben in einem Einspritzdüsensystem für Kraftfahrzeuge mit verbesserten Abgaswerten ist der Hubsensor direkt im Düsenhalter bei äußerst geringem Bauraum anzuordnen. Eine Erfassung des Nadelhubs sollte auch bei einem Anfangshub von ca. 20µm möglich sein; die Umgebungsbedingungen umfassen einen relativ großen Temperaturbereich von ca. -40°C bis 140°C und die Schüttelfestigkeit sollte bis 80g gewährleistet sein.

EP-A-0 644 329 offenbart einen Lage - oder Wegsensor, in welchem der Abstand zwischen einer ReflektionsFläche und einer Antenne entsprechend dem zu messenden Weg verändert wird.

### Vorteile der Erfindung

Ein Lage- oder Wegsensor der eingangs genannten Art ist in der erfindungsgemäßen Weiterbildung mit den kennzeichnenden Merkmalen des Anspruchs 1 dadurch vorteilhaft, dass auf einfache Weise ein Hohlraum mit kleinen Abmessungen vorgesehen werden kann und dass das mechanische Teil, dessen Lage oder dessen Weg erfasst werden soll, in diesen Hohlraum hineinragt, wobei dieser als Mikrowellenresonator ausgelegt ist.

Der erfindungsgemäße Sensor macht sich die, für sich gesehen bekannten Ausbreitungsverhältnissen von elektromagnetischen Wellen im Mikrowellenbereich (ca. 38 GHz) in metallischen Hohlleitern zu Nutze. Durch Reflektionen und Überlagerungen von einfachen ebenen Wellen entstehen Hohlleiterwellen, die auch als Interferenzwellen aufgefaßt werden können. Aufgrund der geometrischen Verhältnisse in einem Rechteckhohlleiter bildet sich als jeweilige Hohlleitergrundwelle eine sogenannte H₁₀-Hohlleiterwelle aus, die im Ausbreitungsverlauf des Hohlleiters ein definiertes Feldlinienbild bezüglich der elektrischen und magnetischen Feldlinien aufweist. In einem zylindrischen Hohlleiter bildet sich entsprechend eine H₁₁-Hohlleiterwelle als Grundwelle aus, wobei dies der einzige ausbreitungsfähige Mode ist, falls der Hohlraum geeignet groß gewählt ist.

Beim erfindungsgemäßen Hubsensor ist ein Resonator für die Hohlleiterwellen ausgebildet, wie er für sich gesehen in H.-G. Unger, _{"}Elektromagnetische Theorie für die Hochfrequenztechnik", Teil I, 2.Auflage, Hüthig Verlag, Seiten 292 bis 294 beschrieben ist. Ein solcher Resonator entsteht, wenn beispielsweise bei einem kreiszylindrischen Hohlleiter beide Enden mit leitenden Platten kurzgeschlossen sind. Die hier entstehenden Eigenschwingungen des Resonators passen mit einem ganzzahligen Vielfachen ihrer halben Ausbreitungswellenlänge gerade in den Resonator hinein. Wenn nun eine metallische Nadel in diesen Hohlraum-Resonator hineinragt ergibt sich eine andere Feldverteilung im Hohlraum-Resonator und somit eine meßbare Änderung der Resonanzbedingungen.

Gemäß der Erfindung wird der Hohlraum, in den die zu erfassende Nadel hineinragt, geometrisch in vorteilhafter Weise so ausgelegt, dass der damit gebildete Resonator bei einer vorgegebenen Betriebsfrequenz (beispielsweise 38 GHz) mit einer Eigenschwingung in einem H₁₁₀-Mode betrieben wird. Ein Oszillator zur Erzeugung der Betriebsfrequenz, der auch in Kombination mit einem sogenannten Doppel-Ratracering als Ersatz eines üblichen Isolators und eines Zirkulators im Gehäuse der zu detektierenden Nadel integriert werden kann ist in ähnlicher Form beispielsweise aus der EP 0 685 930 A1 bekannt. Das sogenannte Doppel-Ratracering bezeichnet eine Anordnung zweier Koppler mit einer Mischdiode in einer Ratrace-Kopplerform.

Bei einem bevorzugten Ausführungsbeispiel wird in vorteilhafter Weise die Sendeleistung des Oszillators über eine drahtförmige Sonde als Sende-/Empfangsantenne in das zum Hohlraum-Resonator ausgebildete Nadelgehäuse eingekoppelt. Ein Teil der Sendeleistung wird dabei über einen Arm des Ratracerings einem Mischer zugeführt und das vom Oszillator entkoppelte Empfangssignal wird dem zweiten Arm des Ratracerings zugeführt. Bei einer Verstimmung des Hohlraum-Resonators durch eine Nadelbewegung kann die Änderung eines Phasennulldurchgangs an einem Ausgang des Ratracerings als niederfrequentes Signal abgenommen werden.

Der Aufbau der oben beschriebenen Schaltung kann auf einfache Weise als Hybridschaltung in einer sogenannten Mikrostreifenleiter-Technik (MIC= monolithic-integrated- circuit)) mit einem integrierten GaAs-MMIC-Schaltkreis (Gallium-Arsenid-microwave-monolithic-integrated-circuit) erfolgen.

Die Bemessungsregeln für die Gestaltung des Hohlraum-Resonators ergeben in Anwendung der beispielsweise für zylindrische Hohlleiter bekannten Berechnungsmethoden einen maximalen Durchmesser dmax = 2,405 * c /π / f und einen minimalen Durchmesser dmin = 1,841 * c / π / f, wobei f die Betriebsfrequenz und c die Lichtfrequenz darstellt. Die Höhe des Zylinders sollte dabei maximal 0,4 * dmax betragen. Bei anderen geometrischen Gestaltung des Hohlraum-Resonators mit z.B. regelmäßigen Vielecken wie 6-Eck, 8-Eck usw. sind die Bemessungsregeln entsprechend anzupassen.

Bei einem bevorzugten Ausführungsbeispiel ergibt sich für eine Betriebsfrequenz von 38 GHz ein Resonatordurchmesser von 5,5 mm und eine Höhe des Zylinders von 2 mm; die Hubbewegungen der Nadel betragen in etwa einen Bereich von 0,2 mm bis 1,5 mm in den Resonanzraum hinein. Hierbei kann der Hohlraum-Resonator symmetrisch oder unsymmetrisch zum Ende der zu detektierenden Nadel angeordnet sein. Eine eventuell notwendige Kraftstoff(Diesel)-Rückführung ist ebenfalls durch den Hohlraum möglich, wenn die dazu erforderliche Bohrung bei der beschriebenen Ausführungsform (bei f = 38 GH_{z} und εᵣ = 1) nicht größer als 2,5 mm gewählt ist und die Hohlraumgröße entsprechend der Dielektrizitätskonstanten korrigiert wird.

Alternativ zu den oben beschriebenen Einspeisungen der Mikrowellenenergie in den Resonanzraum kann dies auch über eine Koppelschleife radial oder orthogonal erfolgen; auch die Einbeziehung eines keramischen, glasartigen oder kunststoffartigen Trägermaterials für die Antenne ist möglich (z.B. Al203, BaTi03, Quarzglas oder Kunststoffe:PE,PC,PP,PTFE etc.)

Andere vorteilhafte Weiterbildungen sind in den Unteransprüchen angegeben.

### Zeichnung

Ausführungsbeispiele eines erfindungsgemäßen Lage- oder Wegsensors werden anhand der Zeichnung erläutert. Es zeigen:
Figur 1 einen Schnitt durch eine Einspritzdüse für die Kraftstoffzufuhr bei einem Kraftfahrzeug mit Verbrennungsmotor, wobei der Hub der Düsennadel erfasst werden soll;
Figur 2 ein Detailbild der Feldverhältnisse einer in einen Hohlraum über der Nadel eingespeisten Mikrowellenenergie;
Figur 3 ein Diagramm des Phasenverlaufs über der Betriebsfrequenz;
Figur 4 ein Ausführungsbeispiel mit einer unsymmetrisch eingekoppelten Mikrowellenenergie in den Hohlraum-Resonator und
Figur 5 ein Schaltungsbeispiel für eine Auswerteschaltung für den Lage- oder Wegsensor.

### Beschreibung der Ausführungsbeispiele

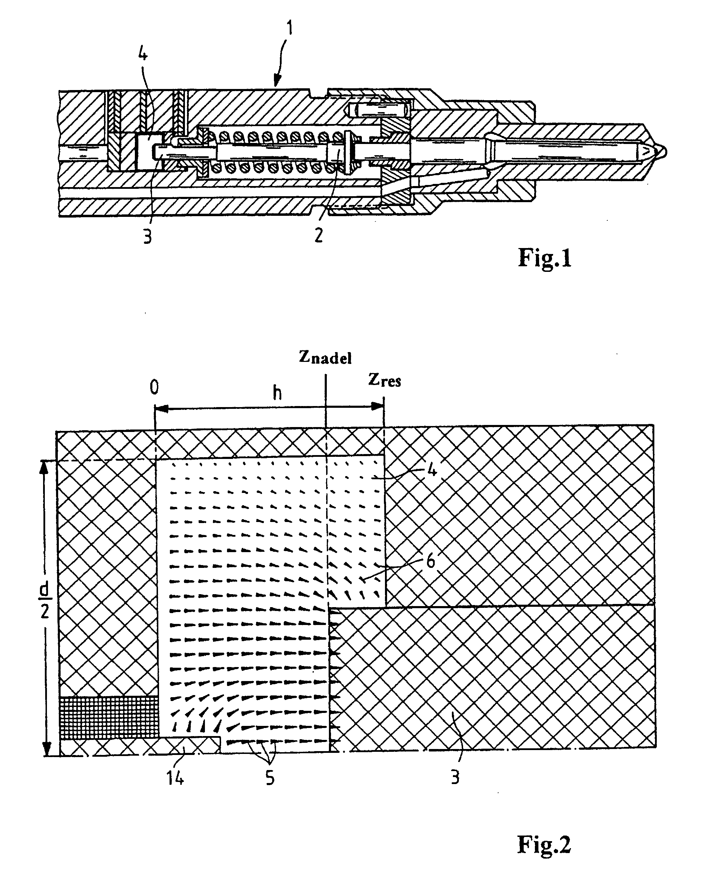

Figur 1 zeigt einen Schnitt durch eine Einspritzdüse 1 für die dosierte Kraftstoffzufuhr für einen Verbrennungsmotor, beispielsweise einen Dieselmotor. Eine in ihrer Funktion hier nicht näher erläuterte Düsennadel 2 als mechanisches Teil führt in ihrer Längsachse, zum Teil relativ kurze Hubbewegungen zum Öffnen oder Verschließen eines Ventilsitzes in der Einspritzdüse 1 aus. Ein Ende 3 der Düsennadel 2 ragt beim Ausführungsbeispiel in einen Hohlraum 4 hinein. Der Hohlraum, dessen Wände ebenso wie das Nadelende 3 metallisch sind, ist in seinen Abmessungen so gewählt, dass er für eine in den Hohlraum eingespeiste Mikrowellenenergie einen Resonator darstellt.

Ein Detailbild nach Figur 2 zeigt den Hohlraum-Resonator 4 mit als Pfeile 5 eingefügten Feldlinienverläufen, die das Feld einer mittels einer Antenne 14 eingespeisten Hohlleiterwelle im H₁₁₀-Mode verdeutlichen sollen. Die Hubbewegung des Nadelendes 3 verkürzt bei dieser Darstellung den Resonanzraum mit einer Ausdehnung zᵣₑₛ im Bereich des Nadelendes 3 diesen auf die Ausdehnung Z_{nadel} und verändert somit die Feldverläufe (Pfeile 6) in diesem Bereich, was zu einer Veränderung der Resonanzfrequenz führt.

Bei dem hier dargestellten Ausführungsbeispiel soll für eine Betriebsfrequenz von 38 GHz ein Resonatordurchmesser d von 5,5 mm und eine Höhe h des zylindrischen Hohlraum-Resonators 4 von 2 mm vorgesehen werden um eine gut messbare Verstimmung der Resonanzverhältnisse im Hohlraum-Resonator 4 zu erhalten. Die Hubbewegungen des Nadelendes 3 betragen in etwa 0,2 mm bis 1,5 mm in den Resonanzraum hinein. Die Berechnung der Abmessungen d und h ergibt sich für zylindrische Hohlraum-Resonatoren aus der Beziehung: dmax = 2,405 * c / π / f und dmin = 1,841 * c / π / f, wobei f die Betriebsfrequenz und c die Lichtgeschwindigkeit darstellt. Die Höhe h des zylindrischen Hohlraums 4 sollte dabei maximal 0,4 * dmax betragen.

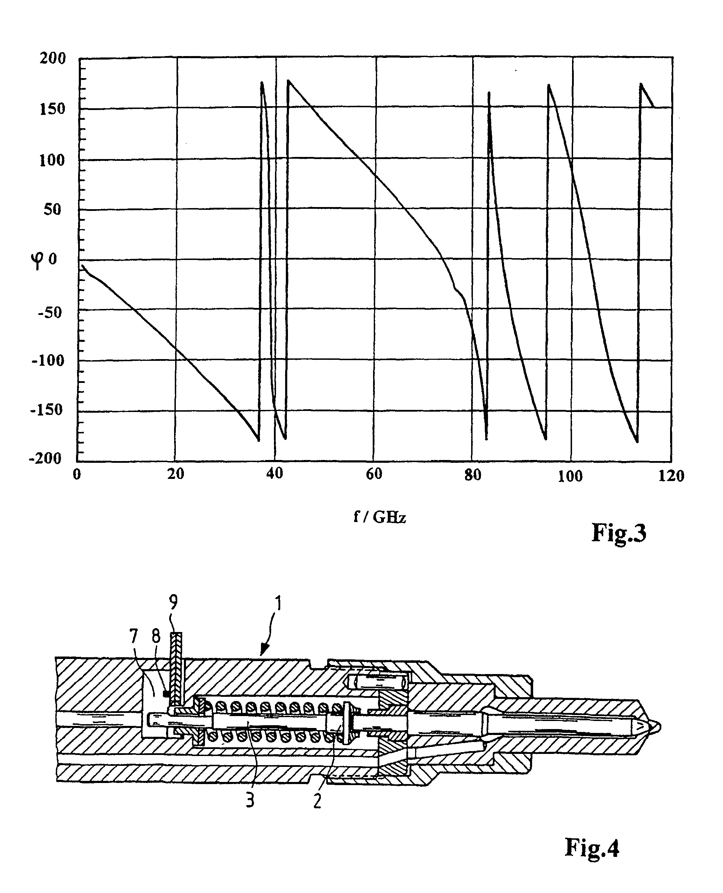

Eine messbare Änderung der Resonanzverhältnisse ergibt sich somit insbesondere mit den oben beschriebenen Abmessungen bei einer Resonanzanpassung des Hohlraum-Resonators 4 auf eine Betriebsfrequenz von 38 GHz, was aus dem Diagramm nach Figur 3 ersichtlich ist. Hier ist erkennbar, dass schon bei einer geringfügigen Verstimmung des Resonanzraumes 4 eine erhebliche, mittels einer geeigneten Elektronik messbaren Änderung der Phase ϕ erfolgt.

Bei einem weiteren Ausführungsbeispiel nach Figur 4 ist ein zum Nadelende 3 unsymmetrischer Hohlraum-Resonator 7 vorgesehen, in den über eine seitlich angeordnete Antenne 8 die Mikrowellenenergie eingespeist wird. Eine Hybridschaltung 9 im Bereich der Antenne 8 enthält die erforderlichen Oszillator- und Mischschaltungen mit denen eine Auswertung des Detektionssignals erfolgen kann.

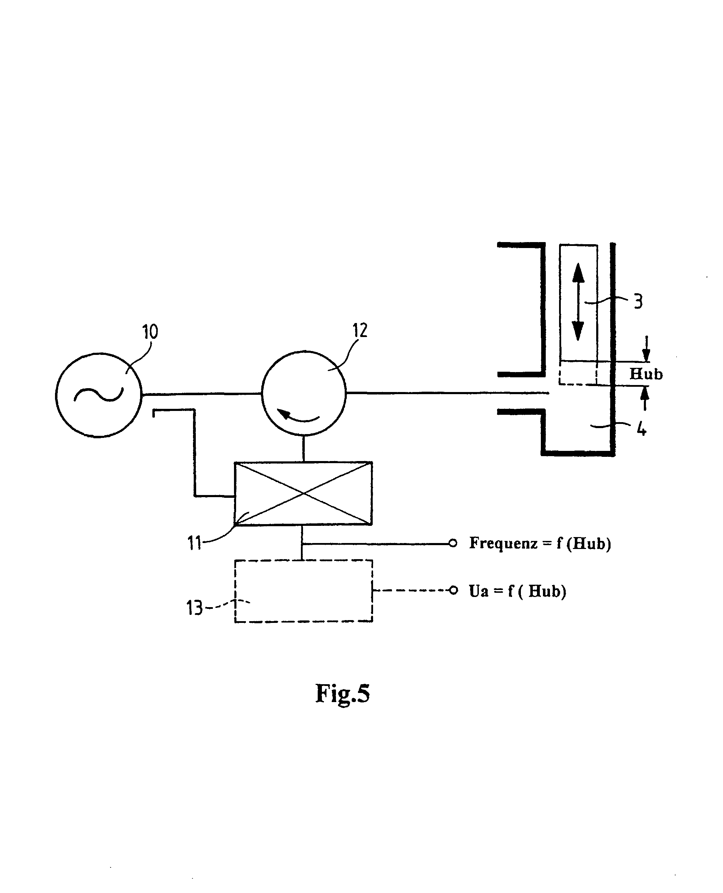

Ein Schaltungsbild nach Figur 5 zeigt schematisch die Schaltungselemente mit denen eine Auswertung des detektierten Signals vorgenommen werden kann. Mit einem Oszillator 10 wird eine Mikrowellenschwingung mit einer Betriebsfrequenz von 38 GHz erzeugt. Mit einem Mischer 11 wird die Differenz zwischen der erzeugten Mikrowellenschwingung und einer über einen Zirkulator 12 in den Hohlraum-Resonator 4 eingespeisten und wieder ausgekoppelten Mikrowellenschwingung erzeugt. Als Ausgangssignal am Mischer 11 erhält man ein niederfrequentes Signal, dessen Frequenz sich mit der Hubbewegung ändert (Frequenz =f(Hub)) oder über einen Frequenz-Spannungs-Wandler 13 ein Signal dessen Spannung Ua sich mit der Hubbewegung ändert ( Ua=f(Hub)).

## Patentansprüche

1. Lage- oder Wegsensor mit einem mechanischen Teil (2), dessen Lage und/oder Bewegung bestimmt werden soll, wobei sein Ende (3) in einen Hohlraum (4, 7) mit wenigstens teilweise metallischen Wänden hineinragt, der in seinen Abmessungen so ausgelegt ist, daß er ein Hohlraum-Resonator (4, 7) für eine eingespeiste elektromagnetische Welle mit einer vorgegebenen Schwingungsfrequenz im Mikrowellenbereich ist und wobei die mit einer Antenne (14, 8) im Hohlraum (4, 7) detektierte elektromagnetische Welle durch eine Änderung der Lage des mechanischen Teils (2) in ihren Werten, insbesondere der Phasenlage beeinflußbar ist, **dadurch gekennzeichnet, daß** der Hohlraum-Resonator (4, 7) in seinen Abmessungen so ausgelegt ist, daß die Hohlraum-Resonanz einen H110-Mode der entstehenden Hohlleiterwelle im Hohlraum-Resonator (4, 7) betrifft, und daß der Hohlraum (4) ein kreiszylindrischer Resonator mit metallischen Wänden ist und daß das zu detektierende ebenfalls metallische Ende (3) des mechanischen Teils (2) wenigstens teilweise im Hohlraumresonator (4) angeordnet ist und daß der Durchmesser des Hohlraums (4) im Bereich zwischen dmax = 2,405 * c/π/f und dmin = 1,841 * c/π/f liegt, wobei f die Betriebsfrequenz und c die Lichtgeschwindigkeit darstellt und die Höhe des zylindrischen Hohlraum-Resonators (4) dabei maximal 0,4 * dmax beträgt.

2. Lage- oder Wegsensor nach Anspruch 1, **dadurch gekennzeichnet, daß** das metallische Ende (3) symmetrisch im Hohlraum-Resonator (4) angeordnet ist.

3. Lage- oder Wegsensor nach Anspruch 1, **dadurch gekennzeichnet, daß** das metallische Ende (3) unsymmetrisch im Hohlraum-Resonator (7) angeordnet ist.

4. Lage- oder Wegsensor nach einem der vorhergehenden AnSprüche, **dadurch gekennzeichnet, daß** das metallische Ende (3) eine Nadel ist.

5. Lage- oder Wegsensor nach einem der vorhergehenden Ansprüche, **dadurch gekennzeichnet, daß**
- eine Einspeisung der Mikrowellenenergie in den Hohlraum-Resonator (4,7) über eine Stabantenne (14;8) radial oder orthogonal erfolgt.

6. Lage- oder Wegsensor nach einem der Ansprüche 1 bis 4, **dadurch gekennzeichnet, daß**
- eine Einspeisung der Mikrowellenenergie in den Hohlraum-Resonator (4;7) über eine Koppelschleife radial oder orthogonal erfolgt.

7. Lage- oder Wegsensor nach einem der Ansprüche 1 bis 4, **dadurch gekennzeichnet, daß**
- eine Einspeisung der Mikrowellenenergie in den Hohlraum-Resonator (4;7) über ein Koaxialkabel oder einen Hohlleiter radial oder orthogonal erfolgt.

8. Lage- oder Wegsensor nach einem der Ansprüche 1 bis 4, **dadurch gekennzeichnet, daß**
- eine Einspeisung der Mikrowellenenergie in den Hohlraum-Resonator (4;7) über eine Antenne auf einem keramischen, glasartigen oder kunststoffartigen Trägermaterial radial oder orthogonal erfolgt.

9. Lage- oder Wegsensor nach einem der vorhergehenden Ansprüche, **dadurch gekennzeichnet, daß**
- die Schaltung (10,11,12,13) zur Erzeugung, Einspeisung und Auskopplung der Mikrowellenenergie in den Hohlraum-Resonator (4;7) eine Hybridschaltung in einer Mikrostreifenleitertechnik (MIC) in konventioneller Technik oder mit einem integrierten GaAs-MMIC-Schaltkreis.

10. Lage- oder Wegsensor nach einem der vorhergehenden Ansprüche, **dadurch gekennzeichnet, daß**
- das zu detektierende mechanische Teil (2) eine Düsennadel (2) eines Einspritzsystems (1) für Kraftstoff in einem Kraftfahrzeug ist und der Hohlraum-Resonator (4;7) direkt im Gehäuse des Einspritzsystems (1) im Bereich des Nadelendes (3) der Düsennadel (2) angeordnet ist.

11. Lage- oder Wegsensor nach Anspruch 10, **dadurch gekennzeichnet, daß**
- in der Wand des Hohlraum-Resonators (4;7) eine Bohrung für eine Kraftstoffrückführung angebracht ist.

## Claims

1. Position or displacement sensor having a mechanical part (2) whose position and/or movement is to be determined, its end (3) projecting into a cavity (4, 7), which has at least partially metallic walls and the dimensions of which are designed such that it is a cavity resonator (4, 7) for a supplied electromagnetic wave with a prescribed oscillating frequency in the microwave region, it being possible to influence the values, in particular the phase angle, for the electromagnetic wave, detected by an antenna (14, 8) in the cavity (4, 7), by changing the position of the mechanical part (2), **characterized in that** dimensions of the cavity resonator (4, 7) are designed such that the cavity resonator relates to an H110 mode of the resulting waveguide mode in the cavity resonator (4, 7), and **in that** the cavity (4) is a circular cylindrical resonator with metallic walls and **in that** the likewise metallic end (3), which is to be detected, of the mechanical part (2) is arranged at least partially in the cavity resonator (4) and **in that** the diameter of the cavity (4) is in the range between dmax = 2.405 * c/π/f and dmin = 1.841 * c/π/f, f representing the operating frequency and c the speed of light and the height of the cylindrical cavity resonator (4) being at most 0.4 * dmax in this case.

2. Position or displacement sensor according to Claim 1, **characterized in that** the metallic end (3) is arranged symmetrically in the cavity resonator (4).

3. Position or displacement sensor according to Claim 1, **characterized in that** the metallic end (3) is arranged asymmetrically in the cavity resonator (7).

4. Position or displacement sensor according to one of the preceding claims, **characterized in that** the metallic end (3) is a needle.

5. Position or displacement sensor according to one of the preceding claims, **characterized in that** the microwave energy is set into the cavity resonator (4, 7) radially or orthogonally via a rod antenna (14; 8).

6. Position or displacement sensor according to one of Claims 1 to 4, **characterized in that** the microwave energy is fed into the cavity resonator (4, 7) radially or orthogonally via a coupling loop.

7. Position or displacement sensor according to one of Claims 1 to 4, **characterized in that** the microwave energy is fed into the cavity resonator (4, 7) radially or orthogonally via a coaxial cable or a waveguide.

8. Position or displacement sensor according to one of Claims 1 to 4, **characterized in that** the microwave energy is fed into the cavity resonator (4, 7) radially or orthogonally via an antenna on a ceramic, glass-type or plastic-type carrier material.

9. Position or displacement sensor according to one of the preceding claims, **characterized in that** the circuit (10, 11, 12, 13) for generating, feeding-in and coupling out the microwave energy into and from the cavity resonator (4, 7) is a hybrid circuit using microstripline technology (MIC) employing a conventional technique or with an indicated GaAs MMIC circuit.

10. Position or displacement sensor according to one of the preceding claims, **characterized in that** the circuit mechanical part (2) to be detected is a nozzle needle (2) of an injection system (1) for fuel in a motor vehicle, and the cavity resonator (4, 7) is arranged directly in the housing of the injection system (1) in the region of the needle end (3) of the nozzle needle (2).

11. Position or displacement sensor according to Claim 10, **characterized in that** a bore for returning fuel is provided in the wall of the cavity resonator (4, 7).

## Revendications

1. Détecteur de position et de course comportant une pièce mécanique (2) dont la position et/ou le déplacement doivent être déterminés, son extrémité (3) pénétrant dans un espace creux (4, 7) comportant des parois au moins partiellement métalliques, qui est conçu de dimensions telles qu'il constitue un résonateur à espace creux (4, 7) pour une onde électromagnétique amenée, ayant une fréquence d'oscillation prédéterminée dans la gamme des micro-ondes, et dans lequel l'onde électromagnétique détectée dans l'espace creux (4, 7) au moyen d'une antenne (14, 8) peut être influencée dans ses valeurs, en particulier la position de phase, par une variation de l'emplacement de la pièce mécanique (2),
**caractérisé en ce que**
le résonateur à espace creux (4, 7) est conçu de dimensions telles que la résonance dans l'espace creux concerne un mode H110 de l'onde du guide d'ondes produite dans le résonateur à espace creux (4, 7), l'espace creux (4) est un résonateur cylindrique circulaire à parois métalliques, l'extrémité (3) également métallique à détecter de la pièce mécanique (2) est disposée au moins partiellement dans le résonateur à espace creux (4) et le diamètre de l'espace creux (4) se situe dans la gamme entre dmax = 2,405 * c/π/f et dmin = 1,841 * c/π/f, f représentant la fréquence de service et c la vitesse de la lumière, et la hauteur du résonateur à espace creux cylindrique (4) est au maximum de 0,4 * dmax.

2. Détecteur de position et de course selon la revendication 1,
**caractérisé en ce que**
l'extrémité métallique (3) est disposée de manière symétrique dans le résonateur à espace creux (4).

3. Détecteur de position et de course selon la revendication 1,
**caractérisé en ce que**
l'extrémité métallique (3) est disposée de manière non symétrique dans le résonateur à espace creux (7).

4. Détecteur de position et de course selon l'une des revendications précédentes,
**caractérisé en ce que**
l'extrémité métallique (3) est une aiguille.

5. Détecteur de position et de course selon l'une des revendications précédentes,
**caractérisé en ce qu'**
une amenée de l'énergie des micro-ondes dans le résonateur à espace creux (4, 7) s'effectue dans le sens radial ou orthogonal par une antenne tige (14, 8).

6. Détecteur de position et de course selon l'une des revendications 1 à 4,
**caractérisé en ce qu'**
une amenée de l'énergie des micro-ondes dans le résonateur à espace creux (4, 7) s'effectue dans le sens radial ou orthogonal par une boucle de couplage.

7. Détecteur de position et de course selon l'une des revendications 1 à 4,
**caractérisé en ce qu'**
une amenée de l'énergie des micro-ondes dans le résonateur à espace creux (4, 7) s'effectue dans le sens radial ou orthogonal par un câble coaxial ou un guide d'ondes.

8. Détecteur de position et de course selon l'une des revendications 1 à 4,
**caractérisé en ce qu'**
une amenée de l'énergie des micro-ondes dans le résonateur à espace creux (4, 7) s'effectue dans le sens radial ou orthogonal par une antenne sur un matériau support céramique, du type verre ou du type matière plastique.

9. Détecteur de position et de course selon l'une des revendications précédentes,
**caractérisé en ce que**
le circuit (10, 11, 12, 13) pour la production, l'amenée et le découplage de l'énergie des micro-ondes dans le résonateur à espace creux (4, 7) est un circuit hybride en une technique de microbandes (MIC) en technique conventionnelle ou avec un circuit de commutation GaAs-MMIC intégré.

10. Détecteur de position et de course selon l'une des revendications précédentes,
**caractérisé en ce que**
la pièce mécanique (2) à détecter est une aiguille (2) d'injecteur d'un système d'injection (1) de carburant sur un véhicule automobile et le résonateur à espace creux (4, 7) est disposé directement dans le boîtier du système d'injection (1) dans la zone de l'extrémité (3) de l'aiguille (2) d'injecteur.

11. Détecteur de position et de course selon la revendication 10,
**caractérisé en ce que**
un perçage pour un retour de carburant est pratiqué dans la paroi du résonateur à espace creux (4, 7).
